# EUROPEAN PATENT SPECIFICATION

(11) **EP 2 598 943 B1**
(45) Date of publication and mention of the grant of the patent: **23.08.2017**
(21) Application number: 11734012.5
(22) Date of filing: 08.07.2011
(51) Int. Cl.: G02F 1/1337

(54) **LIQUID CRYSTAL DISPLAY AND METHOD FOR PREPARATION THEREOF**
FLÜSSIGKRISTALLANZEIGE UND METHODE ZU IHRER HERSTELLUNG
AFFICHAGEUR À CRISTAUX LIQUIDES ET MÉTHODE DE SON PRÉPARATION

(30) Priority: 27.07.2010 KR 20100072281
(43) Date of publication of application: 05.06.2013
(73) Proprietor: Merck Patent GmbH, 64293 Darmstadt (DE)
(72) Inventor: LEE, Seung, Hee, Jeollabuk-do 561-301 (KR); KIM, Dae, Hyun, Chungcheongbuk-do 361-270 (KR); KWON, Dong, Won, Jeonju, Jeonbuk (KR)
(86) International application number: PCT/EP2011/003431
(87) International publication number: WO 2012/013291

(56) References cited:
- US-A1- 2008 266 480
- US-A1- 2009 284 700
- US-A1- 2010 002 157
- US-B1- 6 781 657
- LEE S H; KIM S M; WU S-T: "Review paper: Emerging vertical-alignment liquid-crystal technology associated with surface modification using uv-curable monomer", SOCIETY FOR INFORMATION DISPLAY, vol. 17, no. 7, July 2009 (2009-07), pages 551-559, XP000002658630, DOI: 10.1889/JSID17.7.551

## Description

The present invention is directed to a liquid crystal display which produces an image and a process for manufacturing same.

### FIELD OF THE INVENTION

The present invention is directed to a liquid crystal display which produces an image and a process for manufacturing same.

### BACKGROUND OF THE INVENTION

Liquid crystal displays project images by controlling the light transmission rate of liquid crystals by applied electric fields and they are classified into a vertical electric field-type and a horizontal electric field-type.

In the horizontal electric field-type liquid crystal display, a horizontal electric field applied between pixel and common electrodes positioned side by side on a lower substrate drives liquid crystals of so-called in-plane switching (IPS) mode displays. This horizontal electric field-type display has the merit of a wide viewing angle due to the rotation of liquid crystal directors on a flat substrate, but it disadvantageously shows a poor transmission rate and a slow response time.

In the more conventional vertical electric field-type liquid crystal displays, liquid crystals of twisted nematic (TN) mode are driven by a vertical electric field applied between pixel and common electrodes which are located on a lower substrate and an upper substrate, respectively, which face each other. This vertical electric field-type has the merit of a high transmission rate due to a large aperture ratio, the possibility to apply a rubbing-free process and a relatively higher transmittance compared to that of the IPS mode, but it has the drawback of a rather narrow viewing angle. Alternatively to the TN mode, vertical electric field-type liquid crystal displays have been realized in the electrically controlled birefringence (ECB) mode also called vertically aligned nematic (VAN) mode. In these modes the vertically aligned liquid crystals have negative dielectric constant anisotropy, leading to a higher rotational viscosity as compared to liquid crystals having positive dielectric constant anisotropy, which causes a slow response time. Additionally the vertical alignment of the liquid crystals is not easy and can only be achieved by one of several rather complicated processes.

US 2009/284700 A1 discloses an in-plane-switching-mode vertical-alignment-type liquid crystal display device employing a liquid crystal material of positive dielectric anisotropy. The liquid crystal molecules reveal a pretilt angle between 85° and 90° on both alignment layers of the cell, said pretilt angle being formed by a polymer-sustained alignment method, wherein a reactive mesogen included in the liquid crystal host is polymerized using ultraviolet light while the liquid crystal is driven to display a white image by a horizontal electric field.

US 6 781 657 B1 discloses an in-plane-switching-mode and a fringe-field mode vertical-alignment-type liquid crystal display device employing a liquid crystal material of positive dielectric anisotropy.

The article "Review paper: Emerging vertical-alignment liquid-crystal technology associated with surface modification using uv-curable monomer" by S. H. Lee et al. in the Journal of the SID, Volume 17, No.7, pages 551-559, reviews the development of polymer-induced pretilt angle in multi-domain vertical-alignment liquid-crystal structures. To create a small but well-defined pretilt angle, 0.1 wt.% of a photo-curable monomer is mixed in an LC host and a bias voltage is applied to reorient the LC directors within each domain. The monomers are polymerized near the substrate surfaces by UV exposure. The formed polymer layers change the surface pretilt angle of the LC from 90° to about 89° with a defined azimuthal orientation. Consequently, within each domain the LC reorientation direction responding to the external field is well-defined which leads to faster rise time and higher transmittance.

US 2010/002157 A1 discloses a liquid crystal display device having a first common electrode and a pixel electrode separated by a dielectric layer on a first substrate, and a second common electrode formed on the opposite second substrate. The liquid crystal material employed in US 2010/002157 A1 shows negative dielectric anisotropy, i.e. the director of the liquid crystal molecules is oriented perpendicularly to the electric field lines under an applied electric field. During display operation, a vertical electric field across the liquid crystal layer is switched on and off by applying respective potentials to the second common electrode on the second substrate and the pixel electrode on the first substrate, the first common electrode on the first substrate being electrically floating during the period of image display of the liquid crystal display. A liquid crystal pretilt is established and frozen by a UV polymerization of photo-reactive monomers contained in the liquid crystal mixture while simultaneously applying an electrical field by applying respective electric potentials to both common electrodes and the pixel electrode.

US 2008/266480 A1 describes a hybrid-switching mode LCD device having a first common electrode on the counter substrate and an in-plane electrode configuration on the array substrate including a pixel electrode and a second commone electrode. The liquid crystals are homeotropically aligned at a pretilt angle of 80°, and show a negative dielectric anisotro.

### DISCLOSURE OF THE INVENTION

### TECHNICAL OBJECT OF THE INVENTION

Accordingly, it is an object of the present invention to provide a liquid crystal display which has a high contrast ratio, a wide viewing angle, a low driving voltage, and a rapid response time.

### TECHNICAL FEATURE OF THE INVENTION

In accordance with a first aspect of the present invention, there is provided a liquid crystal display according to appended independent claim 1. In accordance with a second aspect of the invention, there is provided a liquid crystal display according to appended independent claim 2. In accordance with another aspect of the present invention, there is provided a process for manufacturing a liquid crystal display according to appended claim 9.

### EFFECT OF THE INVENTION

As described above, the liquid crystal display according to one embodiment of the present invention provides a wide viewing angle and a high contrast ratio which correspond to the merits of a horizontal electric field-type liquid crystal display and also has the advantage of being realizable by a rubbing-free process.

In addition, the liquid crystal display according to one embodiment of the present invention is capable of lowering the driving and threshold voltages. Further, the liquid crystal display according to one embodiment of the present invention exhibits a rapid response time which makes it possible to view the projected images in a natural way.

### BRIEF DESCRIPTION OF THE DRAWINGS

The above and other objects and features of the present invention will become apparent from the following description of the invention, when taken in conjunction with the accompanying drawings, which respectively show:
- FIG. 1a:: a cross-sectional view of a liquid crystal display according to a comparative example not according the present invention without any applied voltage;
- FIG. 1b:: a cross-sectional view of the liquid crystal display according to the comparative example not according the present invention when a voltage is applied thereto;
- FIG. 2:: a flow diagram of the process for manufacturing the liquid crystal displays shown in FIGs. 1a and 2b;

- FIG. 3:: a cross-sectional view of the liquid crystal display according to the comparative example, obtained by the method for introducing a pretilt angle inducing part according to another embodiment;
- FIGs. 4a and 4b:: cross-sectional views of the liquid crystal displays according to a first embodiment of the present invention, wherein a voltage is not applied and wherein a voltage is applied, respectively;
- FIG. 5:: a cross-sectional view of the liquid crystal display according to the first embodiment of the present invention, obtained by the method for preparing a pretilt angle inducing part according to another embodiment;
- FIGs. 6a and 6b:: cross-sectional views of the liquid crystal displays according to a second embodiment of the present invention, wherein a voltage is not applied and wherein a voltage is applied, respectively; and
- FIG. 7:: a cross-sectional view of the liquid crystal display according to the second embodiment of the present invention, obtained by the method for preparing a pretilt angle inducing part according to another embodiment.

### DETAILED DESCRIPTION OF THE INVENTION

Some embodiments of the present invention will be described in detail using appropriate exemplary drawings. Reference signs are added to each of components of the drawings, and it should be noted that the same component is denoted by the same sign whenever possible in other drawings. Also, in explaining an embodiment of the present invention, if a detailed description on a related known constitution or function clouds the gist of the present invention, the detailed description is omitted.

In addition, the terms "first," "second," "A," "B," "(a)" and "(b)" may be used in explaining components of an embodiment of the present invention. These terms are used only for distinguishing one component from another component, and they do not limit the essences, turns, or orders of corresponding components. It should be understood that when a component is "connected," "combined," or "accessed" to another component, the component may be directly connected, combined, or accessed thereto, and an additional component may be inserted between the two components.

The present invention provides a liquid crystal display having low driving and threshold voltages, and a rapid response time by way of mixing photoreactive monomers, preferably photoreactive liquid crystal monomers and liquid crystal material having positive dielectric constant anisotropy in a specific ratio, introducing the resulting mixture into a unit cell, applying a horizontal electric field, and irradiating a UV ray to the cell such that the liquid crystal molecules form a pretilt angle even at the stage when a voltage is not applied.

More particularly, the present invention is characterized by vertically aligning liquid crystals using a horizontal electric field as a driving voltage (not horizontally aligning them). Such liquid crystal display driven by a horizontal electric field, vertical alignment of liquid crystals having positive dielectric constant anisotropy is characterized by a rotational viscosity lower than the vertical-class mode using liquid crystals having negative dielectric constant anisotropy, thereby exhibiting a rapid response time.

In order to generate a high transmission rate even when driven with a horizontal electric field, the distance between the electrodes should be sufficiently long, which requires a high driving voltage. Therefore, the present invention guides the liquid crystals to orient to a specific direction by using photoreactive monomers, preferably photoreactive liquid crystal monomers to maintain a regular alignment even at the stage when a voltage is not applied, which results in high contrast ratio. Further, the liquid crystals so aligned make it possible to lower the driving voltage and the threshold voltage required in forming the electric field.

The liquid crystal display and the preparation method thereof according to a first comparative example and two embodiments of the present invention will be described in detail using specific drawings as follows.

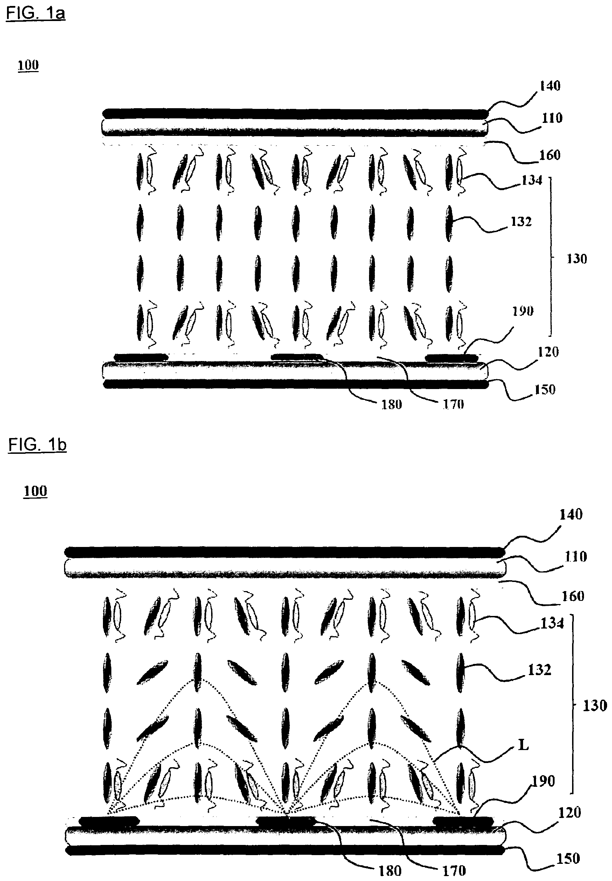

When a voltage is not applied, a cross-sectional view of the liquid crystal display according to the first comparative example is shown in FIG. 1a; and when a voltage is applied, a cross-sectional view of the liquid crystal display, in FIG. 1b.

Referring to FIGs. 1a and 1b, the liquid crystal display (100) comprises a first substrate (110) and a second substrate (120) which face each other, and a liquid crystal layer (130) which is positioned therebetween.

The first substrate (110) is a color substrate comprising a color filter (not shown) for creating full-color images. The color filter in the first substrate (110) may be formed by various methods including an ink-jet printing or etching technique.

The second substrate (120) is a thin film transistor array substrate comprising a thin film transistor array (not shown) as a driver circuit. The thin film transistor array is a switch element for converting liquid crystal cells arranged in a matrix form and signals supplied to the liquid crystal cells. The thin film transistor array comprises thin film transistors, in which the thin film transistors are composed of a gate electrode, a gate insulator, a semiconductor layer, source and drain electrodes, and are preferably formed in a region on one surface of the second substrate, which is outside of the pixel(s), i.e. in the "non-pixel (NP) region" (120).

The first substrate (110), a color substrate, and the second substrate (120), a thin film transistor array substrate, may comprise a first polarizer (140) and a second polarizer (150), respectively, on the opposite surfaces of the liquid crystal layer (130). The first polarizer (140) and the second polarizer (150) function to convert the incidence light which vibrates in various directions to a light which vibrates with one direction, i.e., a polarized light. The first polarizer (140) and the second polarizer (150) may be adhered to the first substrate (110) and the second substrate (120), respectively, by means of an adhesive, but not limited thereto. Light transmission axes of the first polarizer (140) and the second polarizer (150) are orthogonal to each other.

The first substrate (110) and the second substrate (120) comprises the first vertical alignment layer (160) and the second vertical alignment layer (170), respectively, in contact with the liquid crystal layer (130).

The first substrate (110) may comprise a common electrode (not shown) and a dielectric layer (also not shown) positioned under the first vertical alignment layer (160). The common electrode formed on the first substrate (110) generates an electric field with the common electrode (180), and the pixel electrode (190) formed on the second substrate (120), as described below, functions to rotate the liquid crystal layer (130).

The second substrate (120) comprises two electrodes, i.e., the common electrode (180) and the pixel electrode (190). The horizontal electronic field (L) is generated between the common electrode (180) and the pixel electrode (190), and the liquid crystal molecules in the liquid crystal layer (130) align with the horizontal electronic field (L). Further, the pixel electrode (190) which is electrically connected to the drain electrode in the thin film transistor array is formed at the position corresponding to the pixel region (P). The common electrode (180) is positioned on one side of the pixel electrode (190) formed in the pixel region (P) at regular intervals, or optionally at irregular intervals, to form an in-plane electric field.

The pixel electrode (190) and the common electrode (180) comprise a transparent metal layer composed of one metal selected from the group consisting of transparent conductive metals such as indium tin oxide (ITO) and indium zinc oxide (IZO), and a plurality of the pixel electrode (190), while the common electrodes (180) are alternately placed thereon (not shown clearly in the figure). As an alternative to transparent conductive materials the electrodes or part of the electrodes may consist of normal (i.e. opaque) metals. Such an implementation is especially easily realized e.g. for reflective displays. An advantage of the use of metals for the electrodes of for parts of the electrodes is the higher conductivity of metals compared e.g. to ITO. Further, both the common electrode (180) and the pixel electrode (190) are realized in the form of one layer, but they may be formed in separate layers in a modified example. Further, all of the pixel electrodes (190) may be formed with the source and drain electrode of the thin film transistor in the form of one layer, and the common electrode (180) may be made of the same material as the gate line.

The second substrate (120) may further comprise an active matrix layer (not shown), in addition to the common electrode (180) and the pixel electrode (190) formed on the same side. The active matrix may comprise a gate bus line and a data bus line. The region defined by the gate bus line and the data bus line forms one pixel. The common electrode (180) and the pixel electrode (190) may be made of the same material as the gate bus line or the data bus line.

In the liquid crystal display, i.e., in-plane switching mode liquid crystal display (100) comprising the common electrode (180) and the pixel electrode (190) formed on the second substrate (120), a horizontal electric field (L) is formed between two electrodes (180, 190) to align the liquid crystals with the horizontal electric field (L) which is parallel to the two substrates (110, 120), thereby making the viewing angle of the liquid crystal display wide.

The liquid crystal layer (130) is formed by mixing a liquid crystal material (132) and a photoreactive liquid crystal monomer (134) but the mixing method is not limited to a specific mixing process.

The liquid crystal materials (132) are liquid crystals whose primary dielectric constant has positive anisotropy to provide fast response time. For example, the liquid crystal material (132) may be one or more material selected from the group consisting of MJ951160, MJ00435, etc., but any liquid crystal, whose primary dielectric constant has positive anisotropy, can be used without limitation.

The liquid crystal molecules (132) are located between the first substrate (110) and the second substrate (120) which are parallel and face each other. The liquid crystal molecules (132) are vertically aligned between the first substrate (110) and the second substrate (120). When a voltage is not applied (off state), the liquid crystal molecules (132) of the liquid crystal layer (130) are vertically aligned between two substrates (110, 120), as shown in FIG. 1(a).

When a voltage is applied (on state), the horizontal electric field (L) is generated between the common electrode (180) and the pixel electrode (190) and the liquid crystal molecules (132) of the liquid crystal layer (130) align themselves with the horizontal electric field (L), as shown in FIG. 1(b).

The photoreactive liquid crystal monomers (134) are mixed with the liquid crystal molecules (132) and polymerized at a position adjacent to the first substrate (110) and the second substrate (120), or at a region apart from them. The photoreactive liquid crystal monomers (134), which are mixed with the liquid crystal molecules (132) and polymerized, are introduced to the region adjacent or near to the first substrate (110) and the second substrate (120), and the polymerized material is aligned at a pretilt angle at the off state. Such pretilt angle of the polymer of the liquid crystal monomers (134) and the liquid crystal molecules (132), is greater than 0° but less than 90°, particularly greater than 80° but less than 90°, more particularly greater than 85° but less than 90°, with respect to the parallel substrates (110 or 120). If the pretilt angle of said polymer is too small (the liquid crystal lies down), a primary dark state cannot be maintained completely to cause a photo leakage. And if an unnecessarily large voltage is applied, the pretilt angle of the reactive liquid crystal monomers (134) associated with liquid crystal molecules (132) increases to cause a photo leakage.

For the off state, the photoreactive liquid crystal monomers (134) mixed with the liquid crystal molecules (132) and polymerized generate a pretilt angle as shown in FIG. 1a. When an appropriate voltage is applied, a horizontal electric field (L) is generated between the common electrode (180) and the pixel electrode (190) and the photoreactive liquid crystal monomers (134) coupled with the liquid crystal molecules (132) align themselves with the horizontal electric field (L).

The photoreactive liquid crystal monomer (134) is one or more materials selected from the group consisting of RM257 (Formula 1) and EHA (Formula 2), but are not limited thereto.

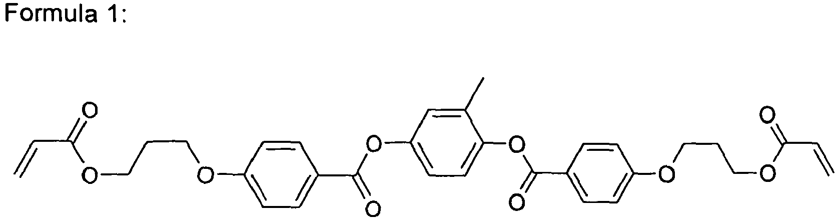

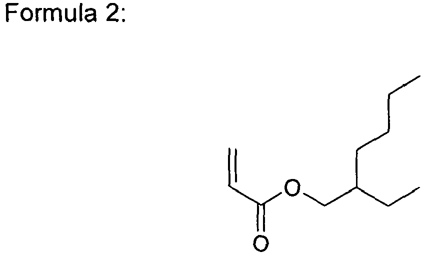

The photoreactive liquid crystal monomer (134) is a liquid crystal material having a terminal group which is polymerizable by the action of a UV-sensitive photo initiator. The photoreactive liquid crystal monomer is a monomer of liquid crystal phase which comprises a mesogen group having liquid crystallinity and a photo-polymerizable terminal group, and can be polymerized by using a UV sensitive photo initiator. An examples of a suitable photo initiator is IRgGCURE®651. The polymerizable compounds, which form the precursor of the polymer may also comprise so called "cross lionkers", an example of which is 1,1,1-trimethylolpropane-triacrylate.

The depth and density of the layer which is prepared by mixing and polymerization of photoreactive liquid crystal monomers (134) and liquid crystal material (132) depend on the kind of liquid crystal material (132), the intensity of the applied voltage, and the desired response time. For example, the higher response time, the larger depth and density of the layer which is prepared by mixing and polymerizing the photoreactive liquid crystal monomers (134) and liquid crystal material (132).

The liquid crystal display (100), when exposed to a horizontal electric field by the vertically aligned liquid crystal having a positive anisotropy of dielectric constant, has a lower rotational viscosity and shows a faster response time compared to a vertically aligned liquid crystal display having a negative anisotropy of dielectric constant. However, it requires a longer distance between the electrodes (110, 120) and a higher driving voltage to obtain a high transmittance between the electrodes (110, 120) because it is driven in a horizontal electric field.

As shown in FIG. 1a, when a voltage is not applied to the electrodes, the liquid crystal molecules (132) are vertically aligned to both substrates and thereby the light passed through the second polarizer (150) is absorbed to the first polarizer (140) without phase difference to make a dark state, wherein the pretilt angle generated by the photoreactive liquid crystal monomers (134) does not affect the dark state.

As shown in FIG. 1b, when the voltage is applied to the common electrode (180) and the pixel electrode (190), the resulting horizontal electric field creates phase retardation of the liquid crystal layer (130) to make the image bright.

Therefore, the liquid crystal molecules of the liquid crystal display (100) maintain a specific arrangement even at the state of off-state and have a high contrast ratio because the liquid crystal layer (130) is guided towards a certain direction by using the photoreactive liquid crystal monomers (134) polymerized with the liquid crystal molecules (132). Further, the deviation of the liquid crystal director is low, and the problems related to the driving voltage and the threshold voltage for generating the required electric field can be solved.

Alternatively, to lower the driving voltage or to increase the response time as described above, an inclined structure must be formed on the second substrate (120) to form a pretilt angle. However, this method requires an additional process for manufacturing the inclined structure on the second substrate (120). In contrast, the liquid crystal display (100) of the present example can form a pretilt angle easily by using the photoreactive liquid crystal monomers (134) of the liquid crystal layer (130) without any separate process for generating a pretilt angle.

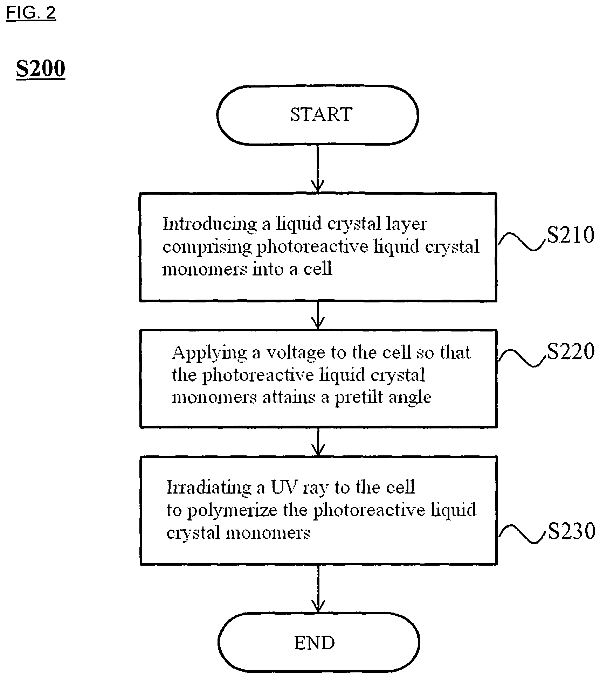

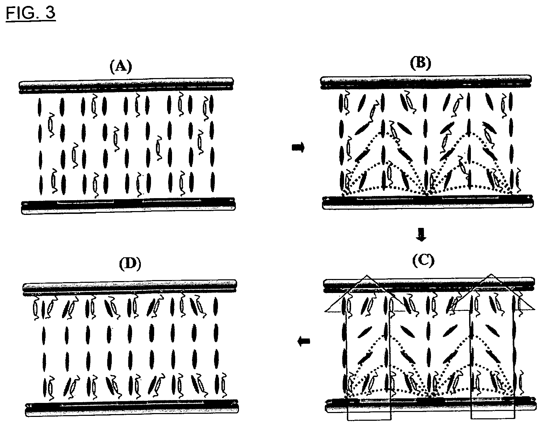

FIG. 2 is a flow diagram showing the process of preparing the liquid crystal display. FIG. 3 is a sectional view of the liquid crystal display prepared by the method according to the comparative example. Referring to FIG. 2, a method for forming a pretilt angel of a photoreactive liquid crystal monomer of the liquid crystal display (200) comprises the steps of: introducing a liquid crystal layer mixed with a photoreactive liquid crystal monomer into a cell (S210); applying a voltage thereto to form a constant pretilt angle on the photoreactive liquid crystal monomers (S220); and irradiating a UV ray to polymerize the photoreactive liquid crystal monomers (S230).

First, in the step of introducing a liquid crystal layer mixed with photoreactive liquid crystal monomers into a cell (S210), the liquid crystal may be of initial positive dielectric anisotropy as described above for fast response time, and it may be one or more selected from the group consisting of MJ951160, MJ00435, and others. In addition, the photoreactive liquid crystal monomer is one or more selected from the group consisting of RM257 (formula I), EHA (formula II), and others.

Referring to FIG. 2 and FIG. 3(A), the liquid crystal layer (130) comprises liquid crystal molecules (132) and photoreactive liquid crystal monomers (134) uniformly mixed. The optimal mixing ratio may be chosen by way of various examples so as to obtain a constant response time and contrast ratio, but if the concentration of the photoreactive liquid crystal monomer (134) is too high, the resulting liquid crystal layer may disturb the course of light or lead to light leakage.

In the step of applying a voltage to form a pretilt angle for the photoreactive liquid crystal monomers (S220), both the photoreactive liquid crystal monomers and liquid crystals form a stable pretilt angle in the direction of constant electric field, and the pretilt angle may be from 0° to less than 90°, preferably from 80° to less than 90°, and more preferably from 85° to less than 90°.

Referring to FIG. 2 and FIG. 3(B), when an electric field is formed by applying a voltage, the liquid crystal molecules (132) and the photoreactive liquid crystal monomers (134) become aligned to the applied voltage at a constant tilted angle. If the pretilt angle formed by liquid crystal monomers near the substrate is too small or large, light leakage may occur. Accordingly, the applied voltage is preferably the threshold voltage.

Referring to FIG. 2 and FIG. 3(C), in the step of irradiating a UV light for polymerizing the photoreactive liquid crystal monomer (S230), the photoreactive liquid crystal monomers migrate towards both substrates of a high anchoring energy, and are "hardened" (i.e. polymerized) to obtain polymers having a constant pretilt angle. Thus, it is possible to maintain a specific arrangement even at an off-state stage and in turn to obtain a high contrast ratio and fast response time, through guiding the liquid crystal layer (130) to a constant direction using the polymerized photoreactive liquid crystal monomer (134). However, when the dose of UV irradiation is too high, the polymeric network is not formed uniformly and a large polymeric network is formed due to agglomeration, which may result in light leakage. Accordingly, the UV irradiation may be typically carried out for 180 minutes or less and at an irradiation dose of about 50∼300 J, but not limited thereto, and to attain the desired pretilt angle, the irradiation dose and time may be appropriately adjusted.

In the liquid crystal display (100) prepared above, when a voltage is not applied to the electrodes, the liquid crystal molecules are vertically aligned with respect to the first and second substrates, and as the consequence, the light passed through the second polarizer (150) is absorbed by the first polarizer (140) to create a dark state, wherein the pretilt angle generated by the photoreactive liquid crystal monomers has little effect on the dark state (see FIG. 1a).

In addition, when a state of brightness is accomplished by supplying a power to a common electrode (180) and a pixel electrode (190) (see FIG. 1b), an electric field in the horizontal direction is created by the supplied power and the phase retardation of said liquid crystal mixture leads to a state of brightness.

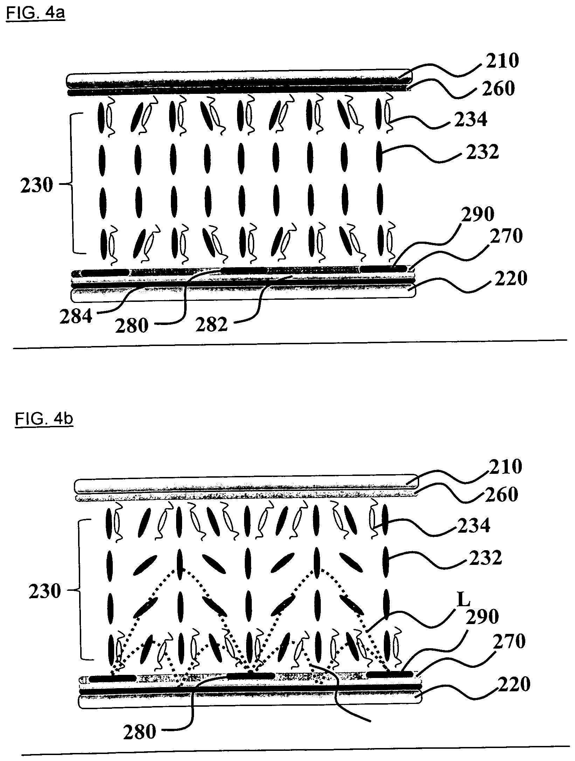

FIG. 4a and FIG. 4b are sectional views of the liquid crystal display according to the first embodiment when voltage is applied or not applied, respectively.

Referring to FIGs. 4a and 4b, the liquid crystal display (200) according to the first embodiment comprises a first substrate (210) and the second substrate (220) which are aligned parallel with each other, and a liquid crystal layer (230) which is positioned between the first substrate (210) and the second substrate (220), wherein the first substrate (210) and the second substrate (220) respectively comprise a first vertical alignment layer (260) and a second vertical alignment layer (270) toward the liquid crystal layer (230), and the second substrate (220) contains two common electrode (280, also referred to "the first pixel electrode") and pixel electrode (290, also referred to "the second pixel electrode"). This display is identical to the liquid crystal display (100) according to the first embodiment described by reference to FIGs. 1a and 1b, and the aforementioned explanation can therefore be used here.

The liquid crystal layer (230) is identical to that of the liquid crystal display (100) according to the above-mentioned first example, wherein the liquid crystal material (232) having a positive dielectric anisotropy are mixed with polymers of photoreactive liquid crystal monomers (234) which are present adjacent to or at a fixed distance from the first substrate (210) and the second substrate (220) and as a mixture with the liquid crystal material (232).

Meanwhile, the liquid crystal display (200) according to the second example has two electrodes (280, 290) as well as the other common electrode (284) on the second substrate (220). This common electrode (284) is formed at the lower part of two electrodes (280, 290) between the second vertical alignment layer (270) and the second substrate (220). Further, a dielectric layer (282) is formed between two electrodes (280, 290) and the other common electrode (284).

The first and second pixel electrodes (280, 290) on the second substrate (220) may be driven by a second transistor (not shown) and may be driven by a first transistor to become a pixel electrode and common electrode.

The other common electrode (284) may be formed into the transparent metal layer made of transparent conductive metal oxides such as indium-tin-oxide (ITO) or indium zinc oxide (120).

The dielectric layer (282) provides an insulating function, and may be formed using one or more selected from the group consisting of photopolymer resin, thermosetting resin, polyamic acid, and other organic resins (epoxy resin, acrylic resin or fluorine resin, etc.); SiO, SiO₂, or SiN.

Referring to FIG. 4a, the state of darkness is achieved when the light passes through the second polarizer (250), without phase retardation, is absorbed by the second polarizer (240), since the liquid crystal molecules are arranged vertically with respect to both substrates due to no voltage applied.

Further, referring to FIG. 4b, if the first pixel electrode (280), the second pixel electrode (290), and the other common electrode (284) are supplied with power, the liquid crystal layer (230) with positive dielectric anisotropy is driven by the resulting horizontal electric field (L) and fringe field (X) which are formed around the first pixel electrode (280), the second pixel electrode (290), the dielectric layer (282), and the other common electrode (284). At this time, a state of brightness is achieved by the occurrence of phase retardation of the liquid crystal layer (230) with positive dielectric anisotropy by the influence of the horizontal electric field (L) and fringe field (X).

The method for giving the photoreactive liquid crystal monomers a pretilt angle in the LCD (200) according to the second example is the same as described previously using FIGs. 2 and 3: it comprises the steps of introducing a liquid crystal layer mixed with photoreactive liquid crystal monomers into a cell (S210), giving the photoreactive liquid crystal monomers a uniform pretilt angle by applying voltage (S220), polymerizing the photoreactive liquid crystal monomers by applying ultraviolet (UV) lay (S230).

Unlike the LCD (100) according to the first example, as described above, the LCD (200) according to the second example comprises the first pixel electrode (280) and the second pixel electrode (290) as well as another common electrode (284) and an additional dielectric layer (282). Therefore, the step of giving photoreactive liquid crystal monomers a uniform pretilt angle by applying voltage (S220) is different in that a uniform pretilt angle is conferred to the photoreactive liquid crystal monomers by the action of the horizontal electric field (L) as well as by fringe field (X) on applying an appropriate voltage using a voltage-applying device.

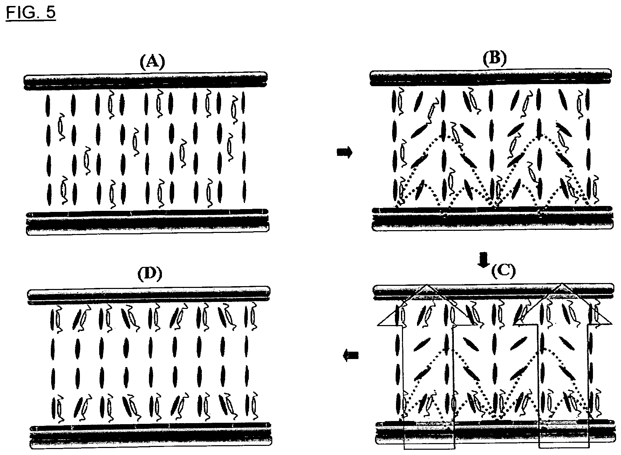

FIG. 5 is cross-sectional views of the LCD of the first embodiment according to different stages for preparing the pretilt angle induced part.

FIGs. 5 (A) to (D) show the method for giving a pretilt angle to the photoreactive liquid crystal monomers in the LCD (200) according to the first embodiment, in the same manner as in FIGs. 3 (A) to (D). As shown in FIGs. 5 (B) and (C), the method comprises applying a voltage by a voltage-applying device and generating a horizontal electric field (L) by applying UV, and also comprises giving photoreactive liquid crystal monomers a uniform pretilt angle by the action of a fringe field (X).

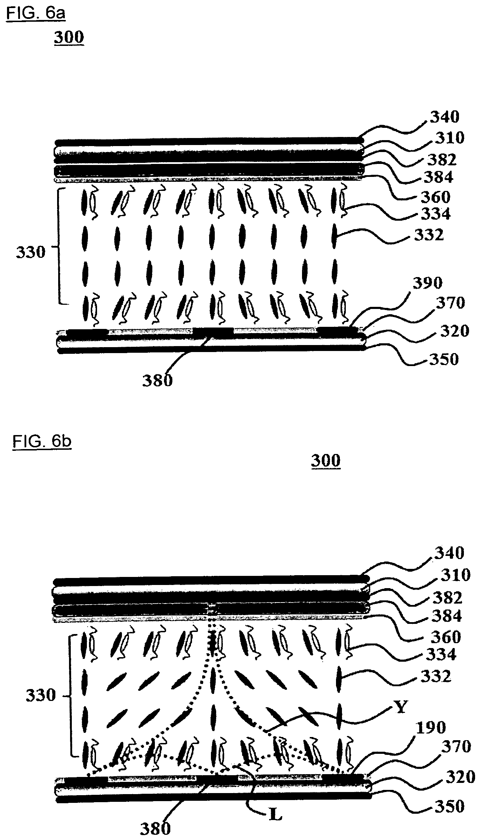

FIGs. 6a and 6b are cross-sectional drawings of the LCD according to a second embodiment when applied voltage is on and off, respectively.

Referring to FIGs. 6a and 6b, an LCD (300) according to the second embodiment is the same as the LCD (200) according to the first embodiment in that it comprises the first board (310) and the second board (320) which face each other and a liquid crystal layer (330) disposed between the first board (310) and the second board (320). The first board (310) and the second board (320) comprise the first vertical alignment layer (360) and the second vertical alignment layer (370) vertically aligned with respect to the direction of the liquid crystal layer (330), and the second board (320) comprises two common electrodes (380) and a pixel electrode (390).

The LCD (300) according to the second embodiment is different from the LCD (200) according to the first embodiment in that it comprises an additional common electrode (384) between the first vertical alignment layer (360) and the first board (310) and a dielectric layer (382) between the first board and the additional common electrode.

The upper board may be prepared by forming the additional common electrode (384) on the first board (310), a dielectric layer (282) on the common electrode (383), and the first vertical alignment layer (360) on the dielectric layer (282), sequentially.

Referring to FIG. 6a, as the liquid crystal molecules (332) are arranged vertically with respect to the planes of both boards (310, 320) due to lack of applied voltage, the light which passes through the second polarizing plate (350) does not suffer a phase retardation and it is absorbed by the second polarizing plate (340) so that it becomes dark.

Moreover, referring to FIG. 6b, when a voltage is applied to the common electrode (380), the pixel electrode (390), and additional common electrode (384), the liquid crystal layer (330) having positive dielectric constant anisotropy is driven by an oblique electric field (Y) and a horizontal electric field (L) formed around the common electrode (380), the pixel electrode (390), the dielectric layer (382), and the additional common electrode (384). At this time, the oblique electric field (Y) and the horizontal electric field (L) induce a phase retardation in the liquid crystal layer (230) having positive dielectric constant anisotropy so that it becomes bright.

The LCD (300) according to the second embodiment has advantages in that a disclination region is not generated between the electrodes and the response time becomes fast.

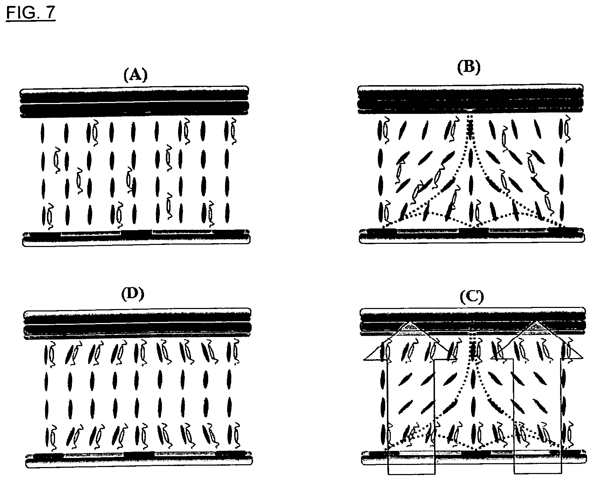

FIG. 7 is cross-sectional drawings for the LCD of the third embodiment according to different stages for preparing the pretilt angle induced part. As shown in FIGs. 7 (A) to (D), the method for giving the photoreactive liquid crystal monomers a pretilt angle in LCD (300) according to the second embodiment is the same as in the LCD (200) according to the first embodiment, except for giving the photoreactive liquid crystal monomers a uniform pretilt angle by the horizontal electric field (L) as well as by the oblique electric field (Y) on applying a voltage using a voltage-applying device in the step of giving the photoreactive liquid crystal monomers a uniform pretilt angle.

In other words, as shown in FIGs. 7 (B) and (C), the method comprises applying a voltage by a voltage-applying device and generating a horizontal electric field (L) by applying UV and it also comprises giving the photoreactive liquid crystal monomers a uniform pretilt angle by the action of the oblique electric field (Y).

Hereinafter described are comparative examples which measure the variation of the transparency of the LCD (100) according to the first comparative example as a function of the pretilt angle as well as the voltage applied to the photoreactive liquid crystal monomers. It is obvious that the results are also applied to the LCDs (200, 300) according to the first and the second embodiments.

An LCD of the conditions of Table 1, e.g., an electrode width of 3 µm, an electrode distance of 10 µm, and a cell gap of 3.5 µm, was prepared, and the photoreactive liquid crystal monomers were examined with regard to an applied voltage as well as the transparency depending on the pretilt angle.

**Table 1:**

| | | |
|---|---|---|
| Electrode width (µm) = *w* | | 3 |
| Electrode distance (µm) = *l* | | 10 |
| Cell gap (µm) = *d* | | 3.5 |
| dΔn (µm) | | 0.42 |
| Rotational viscosity (mPa/s) | | 147 |
| LC | Δ*n* | 0.12 |
| | Δε | 7.4 |
| | K1 | 11.7 |
| | K2 | 5.1 |
| | K3 | 16.1 |

Table 2 shows the results of measuring the applied voltage and the transparency of a LCD measured under the same condition specified in Table 1 depending on the pretilt angle. In Table 2, V10 (V) means the threshold voltage; V10 (%), the percent decrease in the threshold voltage at a pretilt angle 90°; V100 (V), the voltage (driving voltage) at the maximum transmission rate; and V100 (V), the decrease percent of the driving voltage at a pretilt angle 90°.

**Table 2:**

| Pre-tilt (°) | V10 (V) | V10 (%) | V100 (V) | V100 (%) |
|---|---|---|---|---|
| 90 | 7.7 | 0 | 16.8 | 0 |
| 89 | 7.5 | -2.59 | 16.6 | -1.19 |
| 88 | 7.4 | -3.89 | 16.4 | -2.38 |
| 87 | 7.3 | -5.19 | 16.2 | -3.57 |
| 86 | 7.1 | -7.79 | 16 | -4.76 |
| 85 | 6.9 | -10.39 | 15.8 | -5.95 |

Referring to Table 2, the pretilt angle of 90°, i.e., in case of photoreactive liquid crystal monomers in the liquid crystal layer are not given with a pretilt angle, leads an applied voltage of 7.7V, while a pretilt angle of 89° to 85° leads an applied voltage of 7.5V to 6.9V. In other words, it is found that as the pretilt angle, the angle from vertical alignment, increases, the applied voltage decreases.

Meanwhile, under the same applied voltage, it is found that the relative response time becomes shorten.

Meanwhile, LCD according to the embodiments above can solve the problems of disclination due to unstable alignment and slack of response time.

The term "comprise", "consist of" or "have" as used herein means that a component may be inherent, unless explicitly described otherwise, and thus, it should be construed that the relevant subject may further include other components, without excluding them. All technical and scientific terms as used herein have the same meanings as understood by those skilled in the art, unless defined otherwise. The general terms such as those defined in a dictionary should be interpreted as a contextual meaning used in the relevant art, unless clearly defined otherwise, and should not be interpreted as an ideal or excessively formal meaning.

While the invention has been described with respect to the above specification, it should be recognized that various modifications and changes may be made to the invention by those skilled in the art, which also fall within the scope of the invention. Thus, the above-described embodiments are intended to illustrate the present invention without limiting the scope of the invention, and the scope of the present invention is not limited by the embodiments. The scope of the present invention should be construed by the following claims, and all features within an equivalent scope of the present invention will be intended to be included in the appended claims.

### Explanation of the Reference Numbers

110, 210, 310: the first substrate
120, 220, 320: the second substrate
130, 230, 330: liquid crystal layer
132, 232, 332: liquid crystal molecule
134, 234, 334: photoreactive liquid crystal monomer
140, 240, 340: upper polarizer
150, 250, 350: lower polarizer
160, 260, 360: upper alignment layer
170, 270, 370: lower alignment layer
180, 280, 380: common electrode
282, 382: common electrode
284, 384: dielectric layer
190, 290, 390: pixel electrode

## Claims

1. A liquid crystal display (200) comprising:
- a first substrate (210);
- a second substrate (220), **characterized in that**
- it has a vertical alignment layer (260, 270) on each of the two substrates,
- the second substrate has a first electrode, which is a first common electrode (280) and a second electrode, which is a pixel electrode (290), capable of generating a horizontal electric field (L) when a voltage is applied to the first and second electrode;
- it has a dielectric layer (282), which is located on the second substrate (220), below the first and second electrode (280) and (290),
- a third electrode, which is a second common electrode (284) and which is formed below the first and second electrode (280) and (290) between the dielectric layer (282) and the second substrate (220), which is capable to form a horizontal electric field (L) and a fringe field (Y) when a voltage is applied to the first, the second and the third electrode, and
- a liquid crystal layer (230), having a positive dielectric anisotropy, comprising a liquid crystal material (232) and a polymer (234) formed by polymerization of photo-reactive monomers (234), disposed between the first substrate (210) and the second substrate (220) and vertically aligned with respect to the plane of the first substrate (210) and the second substrate (220),
- wherein a pretilt angle is formed in said liquid crystal layer (230) by polymerization of said photo-reactive monomers (234) under application of a voltage applied to the first, the second and the third electrode.

2. A liquid crystal display (300) comprising:
- a first substrate (310);
- a second substrate (320), **characterized in that**
- it has a vertical alignment layer (360, 370) on each of the two substrates,
- the second substrate has a first electrode, which is a first common electrode (380) and a second electrode, which is a pixel electrode (390), capable of generating a horizontal electric field (L) when a voltage is applied to the first and second electrode;
- it has a dielectric layer (382) located on the first substrate (310),
- a third electrode (384), which is a second common electrode and which is formed on the dielectric layer (382) on the first substrate (310), which is capable to form horizontal (L) and tilted (Y) electric fields, when a voltage is applied to the first, the second and the third electrode,
- a liquid crystal layer (330), having a positive dielectric anisotropy comprising a liquid crystal material (332) and a polymer (334) formed by polymerization of photo-reactive monomers (334), disposed between the first substrate (310) and the second substrate (320) and vertically aligned with respect to the plane of the first substrate (310) and the second substrate (320),
- wherein a pretilt angle is formed in said liquid crystal layer (330) by polymerization of said photo-reactive monomers (334) under application of a voltage applied to the first, the second and the third electrode.

3. A liquid crystal display according to claim 1 or 2, wherein the pretilt angle of the liquid crystal material (232/332) of the liquid crystal layer (230/330) is formed by polymerization of said photo-reactive monomers (234/334) using a UV-sensitive photo initiator

4. The liquid crystal display according to one or more of claims 1 to 3, wherein the pretilt angle is in the range from 80° or more to 89.9° or less with respect to the first substrate (210/310).

5. The liquid crystal display according to one or more of claims 1 to 4, wherein the pretilt angle is in the range from 80° or more to 89.9° or less with respect the second substrate (220/320).

6. The liquid crystal display according to one or more of claims 1 to 5, wherein the vertical alignment layer (260/360) on the first substrate (210/310) is in contact with the liquid crystal layer (230/330) for vertical alignment.

7. The liquid crystal display according to according to one or more of claims 1 to 6, wherein the vertical alignment layer (170/270/370) on the second substrate (120/220/320) is in contact with the liquid crystal layer (130) for vertical alignment.

8. A process for manufacturing a liquid crystal display according to one of claims 1 to 7, comprising the steps of:
- introducing said liquid crystal layer, having positive dielectric anisotropy and comprising said photoreactive monomers (S210) into a cell comprising:
- said first substrate;
- said second substrate having said first electrode and said second electrode for generating a horizontal electric field when a voltage is applied to said first and second electrode;
- said third electrode formed either on the first substrate or on the second substrate;
- applying a voltage to the first, the second and the third electrode so that the photoreactive monomer and the liquid crystal layer attains a pretilt angle (S220); and
- irradiating actinic radiation to the cell to polymerize the photoreactive monomers (S230) under application of said voltage to the first, the second, and the third electrode.

9. The process for manufacturing a liquid crystal display according to claim 8, wherein the actinic irradiation (S230) is conducted for a time in the range from more than 0 min. to 180 min. or less, with an energy in the range from 50J or more to 300 J or less, and the applied voltage is the threshold voltage or higher.

## Patentansprüche

1. Flüssigkristallanzeige (200) enthaltend:
- ein erstes Substrat (210);
- ein zweites Substrat (220), **dadurch gekennzeichnet, dass**
- sie eine vertikale Orientierungsschicht (260, 270) auf jedem der beiden Substrate aufweist,
- das zweite Substrat eine erste Elektrode, bei der es sich um eine erste gemeinsame Elektrode (280) handelt, und eine zweite Elektrode, bei der es sich um eine Pixelelektrode (290) handelt, aufweist, die in der Lage sind, ein horizontales elektrisches Feld (L) zu erzeugen, wenn an die erste und zweite Elektrode eine Spannung angelegt wird;
- sie eine dielektrische Schicht (282) aufweist, die sich auf dem zweiten Substrat (220), unter der ersten und zweiten Elektrode (280) und (290), befindet,
- eine dritte Elektrode, bei der es sich um eine zweite gemeinsame Elektrode (284) handelt und die unter der ersten und zweiten Elektrode (280) und (290) zwischen der dielektrischen Schicht (282) und dem zweiten Substrat (220) gebildet ist, die in der Lage ist, ein horizontales elektrisches Feld (L) und ein Streufeld (Y) zu bilden, wenn an die erste, die zweite und die dritte Elektrode eine Spannung angelegt wird, und
- eine Flüssigkristallschicht (230) mit einer positiven dielektrischen Anisotropie, enthaltend ein Flüssigkristallmaterial (232) und ein Polymer (234), das durch Polymerisation von photoreaktiven Monomeren (234) gebildet wird, angeordnet zwischen dem ersten Substrat (210) und dem zweiten Substrat (220) und bezüglich der Ebene des ersten Substrats (210) und des zweiten Substrats (220) vertikal orientiert,
- wobei in der Flüssigkristallschicht (230) durch Polymerisation der photoreaktiven Monomere (234) unter Anlegen einer Spannung, die an die erste, die zweite und die dritte Elektrode angelegt wird, ein Anstellwinkel gebildet wird.

2. Flüssigkristallanzeige (300) enthaltend:
- ein erstes Substrat (310);
- ein zweites Substrat (320), **dadurch gekennzeichnet, dass**
- sie eine vertikale Orientierungsschicht (360, 370) auf jedem der beiden Substrate aufweist,
- das zweite Substrat eine erste Elektrode, bei der es sich um eine erste gemeinsame Elektrode (380) handelt, und eine zweite Elektrode, bei der es sich um eine Pixelelektrode (390) handelt, aufweist, die in der Lage sind, ein horizontales elektrisches Feld (L) zu erzeugen, wenn an die erste und zweite Elektrode eine Spannung angelegt wird;
- sie eine dielektrische Schicht (382) aufweist, die sich auf dem ersten Substrat (310) befindet,
- eine dritte Elektrode (384), bei der es sich um eine zweite gemeinsame Elektrode handelt und die auf der dielektrischen Schicht (382) auf dem ersten Substrat (310) gebildet ist, die in der Lage ist, horizontale (L) und geneigte (Y) elektrische Felder zu bilden, wenn an die erste, die zweite und die dritte Elektrode eine Spannung angelegt wird,
- eine Flüssigkristallschicht (330) mit einer positiven dielektrischen Anisotropie, enthaltend ein Flüssigkristallmaterial (332) und ein Polymer (334), das durch Polymerisation von photoreaktiven Monomeren (334) gebildet wird, angeordnet zwischen dem ersten Substrat (310) und dem zweiten Substrat (320) und bezüglich der Ebene des ersten Substrats (310) und des zweiten Substrats (320) vertikal orientiert,
- wobei in der Flüssigkristallschicht (330) durch Polymerisation der photoreaktiven Monomere (334) unter Anlegen einer Spannung, die an die erste, die zweite und die dritte Elektrode angelegt wird, ein Anstellwinkel gebildet wird.

3. Flüssigkristallanzeige nach Anspruch 1 oder 2, wobei der Anstellwinkel des Flüssigkristallmaterials (232/332) der Flüssigkristallschicht (230/330) durch Polymerisation der photoreaktiven Monomere (234/ 334) unter Verwendung eines UV-empfindlichen Photoinitiators gebildet wird.

4. Flüssigkristallanzeige nach einem oder mehreren der Ansprüche 1 bis 3, wobei der Anstellwinkel im Bereich von 80° oder mehr bis 89,9° oder weniger, bezogen auf das erste Substrat (210/310), liegt.

5. Flüssigkristallanzeige nach einem oder mehreren der Ansprüche 1 bis 4, wobei der Anstellwinkel im Bereich von 80° oder mehr bis 89,9° oder weniger, bezogen auf das zweite Substrat (220/320), liegt.

6. Flüssigkristallanzeige nach einem oder mehreren der Ansprüche 1 bis 5, wobei die vertikale Orientierungsschicht (260/360) auf dem ersten Substrat (210/310) zur vertikalen Orientierung mit der Flüssigkristallschicht (230/330) in Kontakt steht.

7. Flüssigkristallanzeige nach nach einem oder mehreren der Ansprüche 1 bis 6, wobei die vertikale Orientierungsschicht (170/270/ 370) auf dem zweiten Substrat (120/220/320) zur vertikalen Orientierung mit der Flüssigkristallschicht (130) in Kontakt steht.

8. Verfahren zur Herstellung einer Flüssigkristallanzeige nach einem der Ansprüche 1 bis 7, umfassend die Schritte:
- Einbringen der Flüssigkristallschicht mit positiver dielektrischer Anisotropie und enthaltend die photoreaktiven Monomere (S210) in eine Zelle enthaltend:
- das erste Substrat;
- das zweite Substrat mit der ersten Elektrode und der zweiten Elektrode zur Erzeugung eines horizontalen elektrischen Feldes, wenn an die erste und zweite Elektrode eine Spannung angelegt wird;
- die dritte Elektrode, die entweder auf dem ersten Substrat oder auf dem zweiten Substrat gebildet ist;
- Anlegen einer Spannung an die erste, die zweite und die dritte Elektrode, so dass das photoreaktive Monomer und die Flüssigkristallschicht einen Anstellwinkel erreicht (S220); und
- Einstrahlen von aktinischer Strahlung auf die Zelle, um die photoreaktiven Monomere (S230) unter Anlegen der Spannung an die erste, die zweite und die dritte Elektrode zu polymerisieren.

9. Verfahren zur Herstellung einer Flüssigkristallanzeige nach Anspruch 8, wobei die aktinische Bestrahlung (S230) für eine Zeit im Bereich von mehr als 0 min. bis 180 min oder weniger, mit einer Energie im Bereich von 50J oder mehr bis 300 J oder weniger, durchgeführt wird und die angelegte Spannung die Schwellenspannung oder höher ist.

## Revendications

1. Affichage à cristaux liquides (200) comprenant :
- un premier substrat (210) ;
- un second substrat (220),
- **caractérisé en ce que** :
- il comporte une couche d'alignement vertical (260, 270) sur chacun des deux substrats ;
- le second substrat comporte une première électrode, laquelle est une première électrode commune (280), et une deuxième électrode, laquelle est une électrode de pixel (290), disposants de la capacité de générer un champ électrique horizontal (L) lorsqu'une tension est appliquée sur les première et deuxième électrodes ;
- il comporte une couche diélectrique (282), laquelle est située sur le second substrat (220), au-dessous des première et deuxième électrodes (280) et (290) ;
- une troisième électrode, laquelle est une seconde électrode commune (284) et laquelle est formée au-dessous des première et deuxième électrodes (280) et (290) entre la couche diélectrique (282) et le second substrat (220), disposant de la capacité de former un champ électrique horizontal (L) et un champ de franges (Y) lorsqu'une tension est appliquée sur les première, deuxième et troisième électrodes ; et
- une couche de cristaux liquides (230), laquelle présente une anisotropie diélectrique positive, qui comprend un matériau de cristaux liquides (232) et un polymère (234) qui est formé par polymérisation de monomères photo-réactifs (234), laquelle couche est disposée entre le premier substrat (210) et le second substrat (220) et est alignée verticalement par rapport au plan du premier substrat (210) et du second substrat (220), dans lequel :
- un angle de pré-inclinaison est formé dans ladite couche de cristaux liquides (230) par polymérisation desdits monomères photo-réactifs (234) sous l'application d'une tension qui est appliquée sur les première, deuxième et troisième électrodes.

2. Affichage à cristaux liquides (300) comprenant :
- un premier substrat (310) ;
- un second substrat (320), **caractérisé en ce que** :
- il comporte une couche d'alignement vertical (360, 370) sur chacun des deux substrats ;
- le second substrat comporte une première électrode, laquelle est une première électrode commune (380), et une deuxième électrode, laquelle est une électrode de pixel (390), disposant de la capacité de générer un champ électrique horizontal (L) lorsqu'une tension est appliquée sur les première et deuxième électrodes ;
- il comporte une couche diélectrique (382), laquelle est située sur le premier substrat (310) ;
- une troisième électrode (384), laquelle est une seconde électrode commune et laquelle est formée sur la couche diélectrique (382) sur le premier substrat (310), disposant de la capacité de former des champs électriques horizontal (L) et incliné (Y) lorsqu'une tension est appliquée sur les première, deuxième et troisième électrodes ; et
- une couche de cristaux liquides (330), laquelle présente une anisotropie diélectrique positive, qui comprend un matériau de cristaux liquides (332) et un polymère (334) qui est formé par polymérisation de monomères photo-réactifs (334), laquelle couche est disposée entre le premier substrat (310) et le second substrat (320) et est alignée verticalement par rapport au plan du premier substrat (310) et du second substrat (320), dans lequel :
- un angle de pré-inclinaison est formé dans ladite couche de cristaux liquides (330) par polymérisation desdits monomères photo-réactifs (334) sous l'application d'une tension qui est appliquée sur les première, deuxième et troisième électrodes.

3. Affichage à cristaux liquides selon la revendication 1 ou 2, dans lequel l'angle de pré-inclinaison du matériau de cristaux liquides (232/332) de la couche de cristaux liquides (230/330) est formé par polymérisation desdits monomères photo-réactifs (234/334) en utilisant un photo-initiateur sensible aux UV.

4. Affichage à cristaux liquides selon une ou plusieurs des revendications 1 à 3, dans lequel l'angle de pré-inclinaison est dans la plage qui va de 80 ° ou plus à 89,9 ° ou moins par rapport au premier substrat (210/310).

5. Affichage à cristaux liquides selon une ou plusieurs des revendications 1 à 4, dans lequel l'angle de pré-inclinaison est dans la plage qui va de 80 ° ou plus à 89,9 ° ou moins par rapport au second substrat (220/320).

6. Affichage à cristaux liquides selon une ou plusieurs des revendications 1 à 5, dans lequel la couche d'alignement vertical (260/360) sur le premier substrat (210/310) est en contact avec la couche de cristaux liquides (230/330) pour un alignement vertical.

7. Affichage à cristaux liquides selon une ou plusieurs des revendications 1 à 6, dans lequel la couche d'alignement vertical (170/270/ 370) sur le second substrat (120/220/320) est en contact avec la couche de cristaux liquides (130) pour un alignement vertical.

8. Procédé pour fabriquer un affichage à cristaux liquides selon l'une des revendications 1 à 7, comprenant les étapes qui consistent à :
- introduire ladite couche de cristaux liquides, laquelle présente une anisotropie diélectrique positive et laquelle comprend lesdits monomères photo-réactifs (S210), à l'intérieur d'une cellule comprenant :
- ledit premier substrat ;
- ledit second substrat qui comporte ladite première électrode et ladite deuxième électrode pour générer un champ électrique horizontal lorsqu'une tension est appliquée sur lesdites première et deuxième électrodes ;
- ladite troisième électrode qui est formée soit sur le premier substrat, soit sur le second substrat ;
- appliquer une tension sur les première, deuxième et troisième électrodes de telle sorte que les monomères photo-réactifs et la couche de cristaux liquides atteignent un angle de pré-inclinaison (S220) ; et
- irradier un rayonnement actinique sur la cellule de manière à polymériser les monomères photo-réactifs (S230) sous l'application de ladite tension sur les première, deuxième et troisième électrodes.

9. Procédé pour fabriquer un affichage à cristaux liquides selon la revendication 8, dans lequel l'irradiation actinique (S230) est mise en oeuvre pendant un temps qui s'inscrit à l'intérieur de la plage qui va de plus de 0 minute à 180 minutes ou moins, selon une énergie qui s'inscrit à l'intérieur de la plage qui va de 50 J ou plus à 300 J ou moins, et la tension appliquée est la tension de seuil ou plus.
